# FASCICULE DE BREVET EUROPEEN

(11) **EP 2 929 364 B1**
(45) Date de publication et mention de la délivrance du brevet: **14.06.2017**
(21) Numéro de dépôt: 13805807.8
(22) Date de dépôt: 29.11.2013
(51) Int. Cl.: G01S 5/12, G01S 5/14, G01S 5/04, G01S 5/02, G01S 3/72

(54) **PROCEDE DE LOCALISATION PASSIVE D'EMETTEURS RADAR**
VERFAHREN ZUR PASSIVEN LOKALISIERUNG VON RADARSENDERN
METHOD FOR THE PASSIVE LOCALIZATION OF RADAR TRANSMITTERS

(30) Priorité: 07.12.2012 FR 1203322
(43) Date de publication de la demande: 14.10.2015
(73) Titulaire: Thales, 92400 Courbevoie (FR)
(72) Inventeur: GRANDIN, Jean-François, F-78851 Elancourt (FR); RATTON, Laurent, F-78851 Elancourt (FR); SPERLING, Raphaël, F-78851 Elancourt (FR)
(74) Mandataire: Priori, Enrico
(86) Numéro de dépôt international: PCT/EP2013/075160
(87) Numéro de publication internationale: WO 2014/086688

(56) Documents cités:
- EP-A1- 2 270 537
- US-A1- 2007 247 368
- US-A1- 2010 309 055

## Description

La présente invention concerne le domaine de la détection passive d'émissions radar. La présente invention concerne plus particulièrement un procédé de localisation d'émetteurs radar du type à balayage quasi-constant et un système associé.

Les systèmes de détection et de localisation passive ont pour but de détecter le rayonnement d'émetteurs, les localiser, et de déterminer leurs caractéristiques techniques pour faciliter leur identification. Ils ont pour principe de base de déterminer le positionnement des émetteurs en utilisant les informations fournies par l'émission de ces derniers.

Les techniques de détection et de localisation passive mettent généralement en oeuvre le principe de triangulation entre lignes de visée utilisant plusieurs mesures goniométriques de rayonnements émis par les émetteurs radar à localiser.

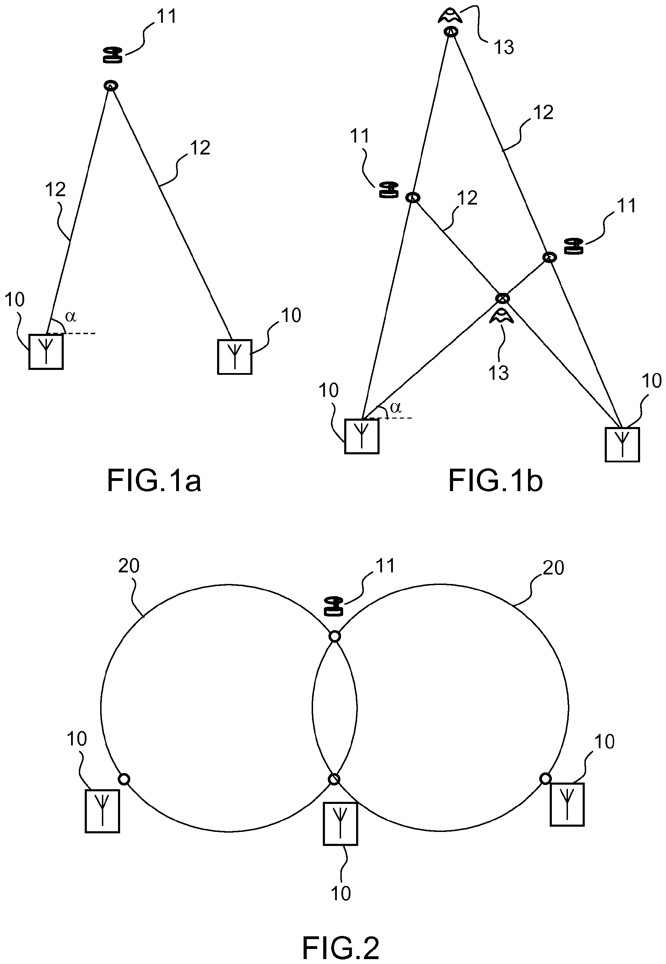

Cette méthode de triangulation est une technique qui donne de bons résultats à condition d'une part qu'il n'y ait pas d'ambiguïté sur l'identification du point commun visé, d'autre part que la disposition géométrique du système d'écoute soit suffisamment ouverte. Le problème d'association ambigüe apparait lorsque plusieurs émetteurs sont présents dans le champ de veille des senseurs passifs ou MRE pour Mesures de Renseignements Electroniques (également connues sous le sigle anglo saxon ESM pour Electronic Support Measures). En effet, les senseurs passifs, ne pouvant mesurer la distance les séparant de l'émetteur, ne peuvent fournir qu'un angle d'arrivée de l'onde interceptée. Dans ce contexte, il existe alors des intersections de lignes de visée ne correspondant pas à des émetteurs réels mais à des sources fictives ou fantômes. Ce phénomène est illustré figure 1b. Il s'agit alors de traiter un problème de théorie de décision, c'est-à-dire d'élaborer un test permettant de trancher entre deux hypothèses complémentaires à savoir, est ce que les pistes des senseurs proviennent ou non de la même source. Si on ne considère que l'information géométrique, le problème d'association est alors formulé sous l'angle de l'association des relevés angulaires ESM. L'absence du paramètre distance en fait un problème "mal posé".

Ce problème d'association de relevés angulaires peut être résolu par des algorithmes d'optimisation de complexité calculatoire importante. Cette complexité devient vite rédhibitoire dans des environnements denses d'émissions radar.

Il est connu dans l'art antérieur, notamment par les demandes de brevet EP 2 270 537 et US 2010/309 055, des procédés et des dispositifs de localisation passive d'émetteurs radio.

Il est également connu, notamment par la demande de brevet US 2007/247 368, un système et un procédé de multilatération pour détecter la position d'une cible en utilisant des unités de réception mobiles.

Un but de l'invention est notamment de corriger les inconvénients précités en proposant une solution permettant d'éliminer rapidement les sources fictives ou fantômes et d'associer des pistes radar provenant d'une même source.

A cet effet, l'invention a pour objet un procédé de localisation passive d'émetteurs radar mis en oeuvre par au moins deux stations MRE, lesdits radars ayant une vitesse de balayage quasi constante au cours du passage sur l'ensemble comprenant au moins deux stations MRE, chacune desdites stations MRE étant apte à intercepter les lobes d'émission d'émetteurs radar et à estimer leurs temps de passage de lobe (TPL) et au moins une station étant apte à estimer l'angle d'arrivée desdits lobes d'émission, ladite localisation des émetteurs radar étant effectuée en testant l'intersection entre une courbe d'iso-Différence de Temps de Passage de Lobe (DTPL) passant par au moins les deux stations MRE et une droite de visée passant par la station MRE ayant mesurée l'angle d'arrivée et d'azimut égal audit angle d'arrivée mesuré.

Selon une variante de mise en oeuvre, le procédé comprend, pour chaque station MRE:
- une étape Etp1 de détection et de suivi de lobes des émetteurs radar présent dans le champ de veille de la station MRE considérée,
- une étape Etp2 d'estimation, pour chaque lobe intercepté, de son angle d'arrivée (AOA), son temps de passage de lobe (TPL) ainsi que des caractéristiques de sa forme d'onde,
- une étape Etp3 d'association locale des lobes d'émission provenant de l'émission du même émetteur radar,
- une étape Etp4 d'intégration des angles d'arrivée et temps de passage de lobe de chaque lobe provenant de l'émission du même émetteur radar et de formation de résumé de mesures de chaque émetteur radar,
- une étape Etp5 de transmission des résumés de mesures de chaque émetteur radar 11 à un module de calcul ;
- et en ce qu'il comprend en outre une étape Etp6 de pistage global mise en oeuvre par le module de calcul, ledit pistage global consistant à associer les doublets intégrés (AOAi, TPLi) provenant d'un même émetteur en utilisant un arbre multi hypothèses, chaque hypothèse étant testée par un calcul de vraisemblance, et à localiser géographiquement ledit émetteur radar.

Selon une variante de mise en oeuvre, l'étape Etp6 comprend en outre un filtrage des hypothèses par contraintes.

Selon une variante de mise en oeuvre, le procédé comprend, pour chaque station MRE :
une étape de réception et de séparation des lobes d'émission des radars présent dans le champ de veille de la station MRE considérée ;
une étape de transmission des données à un module de calcul ;
et en ce qu'il comprend en outre une étape, de corrélation en 2-Dimension des données de toutes les stations MRE.

Selon une variante de mise en oeuvre, l'étape Etp6 n'est pas réalisée avec un arbre multi hypothèses mais en mettant en oeuvre une méthode d'assignation globale.

Un autre but de l'invention est de proposer un système de détection d'émetteurs radar à balayage quasi-constant apte à mettre en oeuvre le procédé précédemment défini.

Ce but est atteint par un système de détection et de localisation apte à mettre en oeuvre le procédé précédemment décrit, ledit système comprenant au moins deux stations MRE et un module de calcul, chaque station MRE comportant un module de réception apte à estimer le temps de passage de lobe d'au moins un émetteur, un module de pistage local, un module de communication apte à communiquer avec au moins les autre stations MRE et un module de synchronisation apte à coordonner les opérations des différentes stations MRE du système, le module de réception d'au moins une station MRE étant apte à estimer l'angle d'arrivée du lobe d'émission d'au moins un émetteur.

Suivant une variante de réalisation le système comprend en outre une station dédiée comprenant un module de communication apte à communiquer avec les modules de communication des stations MRE et en ce que le module de calcul est situé dans ladite station dédiée.

Suivant une variante de réalisation le module de calcul est situé dans une des stations MRE du système.

Suivant une variante de réalisation, le module de synchronisation comprend un récepteur de géolocalisation par satellites.

La présente invention a pour avantage de permettre une localisation plus rapide et plus précise d'émetteurs radar de type à rotation quasi-constante qu'avec une méthode n'utilisant que les angles d'arrivés. De plus le procédé selon l'invention permet d'éliminer immédiatement les cibles fantômes.

D'autres particularités et avantages de la présente invention apparaîtront plus clairement à la lecture de la description ci-après, donnée à titre illustratif et non limitatif, et faite en référence aux dessins annexés, dans lesquels :
- Les figures 1a et 1b illustrent la méthode de localisation de type AOA n'utilisant que les angles d'arrivés ;
- La figure 2 illustre la méthode de localisation de type TPL n'utilisant que les temps de passage de lobe ;
- La figure 3 illustre le principe de localisation en utilisant les informations de temps de passage de lobe et d'angles d'arrivée avec deux stations MRE ;
- La figure 4 représente un synoptique d'un exemple de mise en oeuvre du procédé selon l'invention ;
- La figure 5 représente un exemple de représentation d'arbre multi-hypothèses selon l'invention ;
- La figure 6 représente une illustration de résultats obtenus par le procédé selon l'invention ;
- La figure 7 représente un exemple de réalisation d'un système de détection et de localisation selon l'invention.

La présente invention à pour objet un procédé de localisation passive d'émetteurs radar mis en oeuvre par au moins deux stations ou bases MRE. On supposera que les émetteurs à détecter sont du type à balayage quasi-constant.

Il convient de noter que l'utilisation du terme "balayage quasi-constant " désigne aussi bien les radars à rotation constante que les radars à balayage séquentiel constant ou tout autre radar dont la vitesse angulaire de balayage est constante "en moyenne" au cours du passage sur les récepteurs MRE. De façon générale, ce terme désigne tous type de radar dont le balayage est à vitesse angulaire constante, à une faible fluctuation près, au cours du passage sur les stations MRE.

Le principe de la localisation de type AOA pour Angle Of Arrival ou MAOA pour Multiple Angle Of Arrival n'utilisant que les angles d'arrivés est illustré figure 1a et 1 b. La méthode repose sur l'utilisation de la triangulation entre droites de visée 12. Elle consiste à calculer l'angle de réception α du lobe d'émission d'un émetteur radar 11 à localiser par au moins deux stations MRE 10, dont on connait la position, et en utilisant cette information, positionner le radar 11 dans l'espace par estimation du point de convergence.

Lorsqu'il n'y a qu'un seul un émetteur 11 à localiser et que les stations 10 sont suffisamment éloignées, cette méthode est assez précise, sous réserve que l'espacement entre les récepteurs soit suffisant. Comme expliqué précédemment, un problème se pose lorsque le nombre d'émetteurs 11 augmente. En effet, du fait du croisement des droites de visée 12, des sources fictives 13 ou fantômes apparaissent bien qu'aucun émetteur ne soit présent.

La figure 2 illustre le principe de la localisation par différence de temps de passage de lobe ou DTPL. On suppose que l'émetteur 11 à localiser balaye l'espace à une vitesse de rotation constante. La méthode repose sur l'utilisation de la différence des temps de passage d'un lobe d'émission d'un émetteur radar 11 au niveau des stations MRE 10. On montre que la courbe iso-DTPL est un cercle passant par le point d'émission et les 2 stations MRE 10. L'émetteur 11 peut donc être localisé en utilisant au moins trois stations MRE 11 balayées par le faisceau dudit émetteur 11. La localisation de l'émission peut être obtenue à l'intersection de 2 cercles iso-DTPL 20 passant chacun par deux stations MRE 10.

Le principe de l'invention repose sur l'utilisation conjointe du principe de localisation et association du type "AOA" et de celui du type "DTPL".

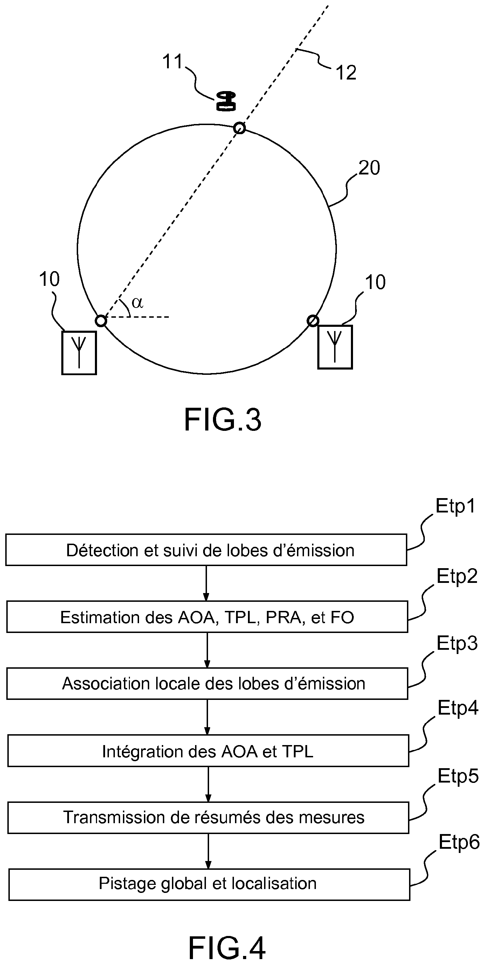

En référence à la figure 3, deux stations MRE 10 interceptent les lobes d'émission d'un émetteur radar 11 à balayage quasi-constant et en estime les paramètres caractéristiques. La localisation de l'émetteur se fait en recherchant l'intersection du cercle iso DTPL 20 passant par les deux stations 10 et d'au moins une droite de visée 12 passant par la station 10 ayant mesurée l'angle d'arrivée du lobe d'émission et d'azimut égal audit angle d'arrivée mesuré.

De façon avantageuse, en présence de plusieurs émissions radar l'association des mesures de DTPL et des mesures AOA provenant d'une même émission radar est beaucoup plus facile et robuste que l'association avec AOA seuls ou DTPL seuls. En effet il faut que les courbes d'iso mesure de type "DTPL" et "AOA" d'un même émetteur radar se croisent toutes en un même point au bruit près pour valider une association ce qui est plus sûr que la convergence des courbes d'iso mesure de type "AOA seuls" ou des courbes d'iso mesure de type "DTPL seuls".

En référence à la figure 4 le procédé suivant l'invention comprend principalement pour chaque station MRE, une première étape Etp1 de détection et de suivi de lobes des émetteurs radar 11 présents dans le champ de veille de la station MRE 10, une étape Etp2 d'estimation, pour chaque lobe intercepté, de son angle d'arrivée (AOA), de son temps de passage de lobe (TPL) ainsi que des caractéristiques de sa forme d'onde, une étape Etp3 d'association, au sein de chaque station MRE 10, des lobes successifs provenant de l'émission du même émetteur radar 11, une étape Etp4 d'intégration des angles d'arrivée et temps de passage de lobe de chaque lobe provenant de l'émission du même émetteur radar 11, une étape Etp5 de transmission de chaque triplet de mesures comprenant l'angle d'arrivée intégré (AOAi), le temps de passage de lobe intégré (TPLi) et la période de rotation d'antenne (PRA) ainsi que la forme d'onde (FO) de chaque émetteur radar 11 à un module de calcul 75 et une étape Etp6 de pistage global, mise en oeuvre par le module de calcul 75. Ce pistage global consiste essentiellement à associer les doublets intégrés (AOAi, TPLi) transmis par chaque MRE provenant d'un même émetteur 11 radar, et en estimer la position géographique. Le cas échéant, si l'émetteur 11 radar est en mouvement, les localisations successives seront filtrées par un estimateur de trajectoire.

La première étape Etp1 du procédé selon l'invention consiste à intercepter les lobes d'émissions des radars 11 de l'environnement des stations MRE 10. Chaque station MRE intercepte les émissions radar de son champ de veille sur une même fenêtre temporelle. Un algorithme de désentrelacement de lobes permet de séparer les impulsions de chaque émission et donc de caractériser l'interception réalisée sur chaque lobe. Ainsi si plusieurs émissions sont simultanément présentes elles seront séparées par le désentrelacement.

La fonction d'extraction produit des plots représentant chaque émission. Chaque plot décrit la séquence d'impulsions qu'il représente par des ensembles de valeurs correspondant aux mesures de certains paramètres parmi lesquels on trouve la ou les fréquences nominales, la ou les périodes de répétition des impulsions (PRI), la ou les largeurs d'impulsions (LI), la ou les angles d'arrivée (ou AOA selon le sigle anglo saxon pour Angle Of Arrival) et le temps de passage de lobe (TPL). A cette liste de paramètres mesurables s'ajoute également un ensemble de paramètres qualitatifs caractérisant les synthèses d'informations.

Le temps de passage de lobe peut être obtenu par différents procédés d'interpolation comme par exemple une méthode de régression parabolique. Cette interpolation permet d'estimer le temps précis où le niveau du lobe est maximal.

Ainsi, à l'issue de l'étape Etp2 on dispose, dans chaque station MRE 10, d'un doublet (AOA, TPL) et d'un résumé des caractéristiques de la forme d'onde pour chaque lobe intercepté.

Une fois ces paramètres obtenus un algorithme de pistage local permet d'associer au fil du temps les différents lobes d'émission entre eux au cours d'une étape Etp3. Cette étape est réalisée au sein de chaque station MRE 10. L'objectif du traitement est de désentrelacer les différents lobes d'émission et ceci le plus rapidement possible. Ce traitement délivre alors une séquence de lobes pour chaque émission et permet le dénombrement des radars présent dans la zone de veille de la station MRE. Pour associer les lobes par émission, l'algorithme peut utiliser conjointement la description de la forme d'onde (liste des PRIs, des fréquences, ...) les mesures d'angle d'arrivée et les temps de passage de lobe.

Suivant un exemple de mise en oeuvre nullement limitatif, cette étape d'association monoplateforme MRE peut être réalisée sur un temps de 30s. Bien entendu, ce temps peut être ajustable suivant le type de radar observé.

Un facteur clé mis en jeu dans la localisation d'émetteurs radar est leur période de rotation d'antenne. Ces PRA, bruitées, sont rarement parfaitement fixes, généralement elles fluctuent. Cette fluctuation peut être fortement réduite par intégration des temps de passage de lobe. Pour cela on considère une séquence d'un certain nombre (impair) d'estimation du TPL. Il peut être démontré mathématiquement que la meilleure estimation du temps de passage de lobe c'est à dire l'estimation avec la variance la plus faible, est obtenue en considérant le temps de passage de lobe situé au milieu de la séquence. Par la suite on notera ce temps de passage intégré, obtenu par régression temporelle, TPLi. La PRA filtrée peut également être obtenue par ce traitement de régression en considérant la pente de la droite obtenue.

De même chaque mesure d'angle d'arrivée est bruitée. Ce bruit peut être réduit en intégrant les mesures d'angles d'arrivée sur plusieurs passages de lobes ou par régression angulaire pour obtenir un angle d'arrivée moyen AOAi.

On dispose donc pour chaque station MRE 10 et pour chaque séquence de passage de lobe d'un doublet de mesures intégrées (AOAi, TPLi).

Suivant un mode de mise en oeuvre du procédé, le nombre de passages de lobes sur lequel la station MRE intègre les mesures peut être fixé par l'opérateur suivant le type de radar observé.

Au niveau de chaque station MRE 10, on dispose donc à l'issue du pistage local de résumés MRE. Les stations MRE délivrent "idéalement" un résumé R par émission radar. Ce résumé R synthétise la séquence des lobes perçus pour une émission, et peut comporter non exhaustivement :
- Le label de la piste MRE locale
- Un résumé temporel :
   - Le temps du premier et du dernier lobe, le nombre de lobes (impair) ;
   - La PRA intégrée avec sa fluctuation, ce qui permet de savoir si la PRA peut être considérée comme constante et donc de savoir si la méthode selon l'invention est applicable ;
   - Le temps du lobe milieu et son incertitude ;
- Un résumé de la Forme d'Onde
   - La liste des PRIs utilisées (ou l'histogramme) ;
   - La liste des Fréquences utilisées (ou l'histogramme) ;
   - Autres paramètres pertinents (Intrapulse, Polarisation, identification....) ;
- Un résumé en AOA (AOA moyenne et vitesse en AOA) au temps milieu et l'incertitude associée

On dispose par ailleurs des positions géographiques et des orientations des stations MRE. Dans le cas de stations mobiles, ces paramètres peuvent être fournis par les instruments de navigation aux instants des mesures.

Une fois les résumés R des lobes d'émission déterminés, chaque station MRE 10 transmet ces résumés à un module de calcul 75 au cours d'une étape Etp5. Ce module de calcul peut être localisé au sein d'une des stations MRE 10 du système de détection ou au sein d'une station dédiée 77 ou station maître.

Dans certains cas, l'estimation des caractéristiques du lobe d'émission est réalisée en instantané sur un seul passage de lobe. Ce type de cas de figure peut se rencontrer avec un émetteur 11 possédant une PRA assez élevée ou par exemple avec un émetteur radar 11 embarqué dans un porteur se déplaçant à une vitesse élevée comme par exemple un avion. Dans ce cas, les doublets (AOA, TPL) ne sont pas intégrés et les résumés de mesures comprennent leurs valeurs brutes.

L'étape suivante, Etp 6, de pistage global consiste à associer les pistes locales, élaborés au sein de chaque station MRE 10, provenant d'un même émetteur 11 radar. Elle consiste à associer dans le temps les résumés Rᵢ d'une même émission provenant des différentes stations MRE. Ce pistage global est réalisé au sein du module de calcul 75. Cette association est difficile car plusieurs émissions similaires et colocalisées sont simultanément présentes.

Si le label de la piste MRE locale a déjà été associé par le passé l'opération consiste en une mise à jour des caractéristiques de piste, et une vérification de la pertinence de l'association décidée auparavant.

Pour les labels non pistés, on établit un arbre des pistes multi-hypothèses ou arbre d'hypothèses. Pour cela on fait appel à un algorithme de pistage baptisé PMH pour Pistage Multi-Hypothèses. L'opération consiste à tester virtuellement l'ensemble des solutions de regroupement possibles.

L'un des fondements de cet algorithme est de mesurer la vraisemblance qu'un N-uplet de résumés provient d'un même émetteur 11. On fait l'hypothèse que les stations détectent tous les lobes. Le montage des solutions hypothèses ne montrera par conséquence que des hypothèses faisant intervenir les stations MRE du système de détection.

Avant de construire l'arbre d'hypothèse, on effectue un premier élagage en utilisant le pistage local. On part de l'hypothèse qu'aucune des stations MRE 10 n'a mélangé les émissions provenant d'émetteurs différents. On ne peut donc pas associer ensemble des résumés provenant de la même station MRE 10, ces résumés sont donc placés dans des noeuds séparés.

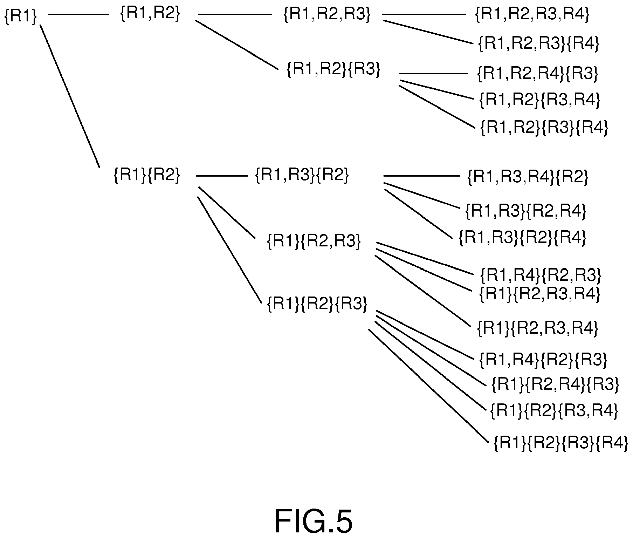

A titre d'illustration nullement limitative, un noeud d'un arbre multi-hypothèse est représenté figure 5. Dans cet exemple on a considéré un 4-uplet de résumé (R1, R2, R3, R4). On suppose également que dans ce 4-uplet, le résumé R1 provient d'une station MRE et que les résumés R2, R3 et R4 proviennent d'une ou plusieurs stations différentes de la précédente.

On considère le résumé R1. A partir de ce résumé on construit deux premières hypothèses, soit R1 et R2 proviennent de la même émission, soit ils proviennent d'émissions séparées. En référence à la figure 5, un regroupement de résumés signifie que l'on considère que les résumés concernés et ceux-là seuls proviennent d'un même radar donné.

On considère ensuite le résumé R3 et à partir des deux hypothèses potentielles précédentes, on construit cinq nouvelles hypothèses en associant ou non ce résumé R3 avec une hypothèse d'émission. La même opération est ensuite effectuée avec le résumé R4.

L'algorithme de pistage multi-hypothèses est activé de façon séquentielle au fur et à mesure de l'arrivée des nouveaux résumés. Lorsque le module de calcul reçoit le N-uplet de résumé, l'algorithme envisage toutes les partitions "admissibles" de ces résumés en ensembles de regroupements. Une telle partition sera appelée par la suite hypothèse globale.

Dès que l'arbre d'hypothèse comporte une hypothèse hybride c'est-à-dire dès que l'on fait l'hypothèse qu'au moins deux résumés proviennent du même émetteur, le système commence à tester la vraisemblance de l'hypothèse. De façon à réduire les temps de calcul on impose à l'algorithme certaines contraintes d'élagage. Par exemple, on choisit de ne pas valider une association si les PRA ne sont pas compatibles entre elles c'est-à-dire non semblables, si les formes d'ondes sont incompatibles ou si les angles d'arrivée sont incompatibles. Ceci permet, sans faire de calcul, de tester l'incompatibilité de certaines hypothèses de l'arbre. Par la suite, on appellera "hypothèses terminales" les hypothèses restantes après cet élagage.

Une fois ce second élagage effectué, on calcule la vraisemblance de chaque hypothèse terminale. Comme vu précédemment, les résumés associés aux hypothèses sont des mesures de forme d'onde, de balayage (PRA) et le doublet intégrés (AOAi, DTPLi). La vraisemblance sous l'angle du balayage (PRA notamment) et de la forme d'onde (PRI et fréquences principalement) consiste à mesurer la distance statistique entre les valeurs des différents résumés. La vraisemblance sous l'angle de la localisation conjointe DTPL et AOA consiste à vérifier que la position estimée pour cette hypothèse est celle dont les valeurs théoriques des paramètres observés sont les plus proches (au sens d'une distance quadratique dans le cas gaussien) des mesures effectuées. La localisation revient donc à rechercher le maximum de la fonction de vraisemblance sur l'ensemble des positions possibles. Le maximum atteint est la valeur de vraisemblance recherchée qui valide ou invalide l'hypothèse en cours.

La vraisemblance est une quantité qui va être seuillée. Si la valeur de vraisemblance est supérieure à un certain seuil, l'hypothèse est validée signifiant que les résumés proviennent d'un même émetteur 11. Suivant un exemple de mise en oeuvre ce seuil peut être fixé à partir d'une loi du Chi-2 dans l'hypothèse d'erreurs de mesure de type gaussiennes. Au fur et à mesure de la validation des hypothèses on réduit la taille de l'arbre d'hypothèses en retirant les données qui ont été associées et en parallèle on crée une nouvelle piste globale qui contient les données des résumés.

Lorsque les pistes sont créées elles sont suivies par un algorithme de pistage "classique" et les futures Résumés s'y rattachant sont directement associés sans entrer dans l'arbre d'hypothèses. La localisation est alors directement mise à jour.

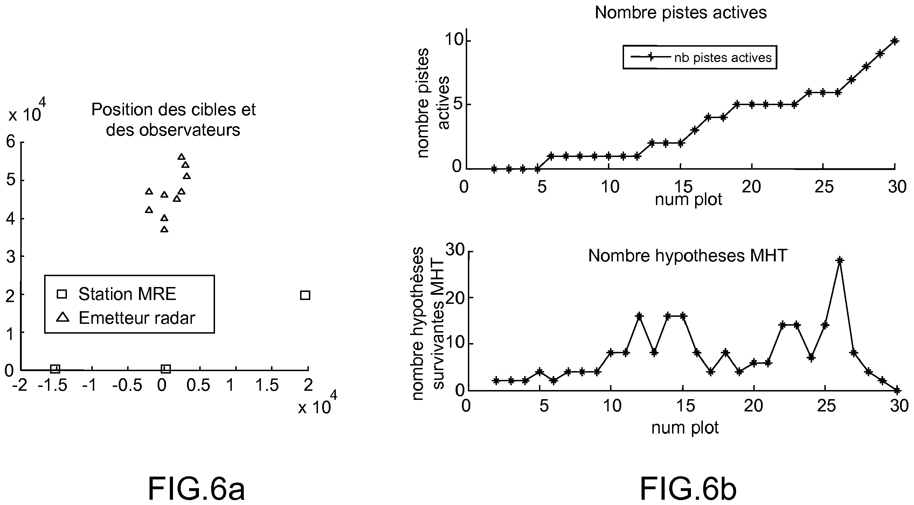

Les figures 6a et 6b illustrent un exemple de résultat obtenu en appliquant le procédé selon l'invention.

Sur la figure 6a on a représenté les positions des stations MRE 10 et des émetteurs 11 à localiser dans un repère cartésien. Dans l'exemple proposé, le système de détection comporte trois stations MRE 11 et dix émetteurs radar sont répartis dans l'espace. Parmi les dix émetteurs radar cinq possèdent des PRA identiques.

Afin de mettre en évidence l'efficacité du procédé suivant l'invention, la figure 6b représente en superposition l'évolution du nombre d'hypothèses et l'évolution du nombre de pistes actives en fonction du nombre de plot radar. On constate que le nombre d'hypothèses fluctue au fur et à mesure que l'algorithme découvre les hypothèses et les pistes. A partir du 26^{ième} plot, la courbe décroit pour venir à zéro. Au bout du 30^{ième} plot, l'algorithme à terminé, il a trouvé tous les émetteurs. En parallèle on peut remarquer que le nombre de pistes actives augmente progressivement au fur et à mesure que l'algorithme identifie les émetteurs.

Suivant un autre mode de mise en oeuvre, l'association est effectuée par une méthode de corrélation généralisée. Contrairement à la méthode présentée précédemment, les stations MRE 10 séparent les différents lobes d'émission reçus mais n'effectuent pas de pistage local et transmettent tous les résumés au module de calcul 75. Le module de calcul, après réception des données des différentes stations MRE 10 effectue une corrélation de ces données. Le module de calcul va corréler tous les lobes transmis par toutes les stations 10 en 2-Dimensions et va rechercher les endroits où apparaissent des "pics de DTPL" et des " pics de PRA " entre les données des stations. Ces pics conjoints de DTPL et de PRA vont ainsi fournir l'association des lobes sur chacune des stations MRE 10. Cette méthode plus coûteuse en temps de calcul a l'avantage d'être optimale.

Suivant un autre mode de mise en oeuvre du procédé suivant l'invention, l'association des pistes est réalisée par une méthode d'assignation optimal, de type assignation SD ou SD-assignement selon le terme anglo saxon. Dans ce cas, l'ensemble des résumés Ri reçus de chaque station MRE 10 pendant une durée prédéfinie sont traités simultanément et non séquentiellement comme dans la méthode de pistage PMH précédemment décrite. Une fonction de coût, construite sur la base de l'expression de la vraisemblance, est évaluée pour chaque hypothèse d'association de résumés. Par la suite ces hypothèses seront nommées hypothèses élémentaires.

Dans le cas particulier de deux stations MRE (2D assignment), qui aurait chacune transmis N Résumés, le calcul du coût est fait pour N² hypothèses élémentaires. Pour les paires dont on sait, sans évaluation fine du coût (par exemple par élagage en tenant compte de la PRA), qu'elles sont incompatibles, le coût sera mis à une valeur par défaut qui empêche la production d'un résultat dans lequel apparaîtraient ces paires interdites. Ensuite, l'algorithme d'assignation SD consiste à résoudre la problématique suivante : trouver la séquence d'association qui minimise le coût global, ce coût global étant défini comme la somme des coûts des hypothèses élémentaires, sous un certain nombre de contraintes. Ces contraintes peuvent être, par exemple, un résumé issu d'une station MRE ne peut être apparié qu'à un seul résumé issu d'une station MRE différente ou un Résumé issu d'une station MRE ne peut être associé à un résumé de la même station MRE... Cet algorithme peut éventuellement prendre en compte la possibilité de ne pas trouver de correspondant à certains Résumés, dans le cas où les stations MRE n'auraient pas toutes détecté les émissions correspondantes.

Suivant un mode de mise en oeuvre de l'invention, le procédé peut posséder un mode dégradé. Ainsi si aucune des stations MRE 10 ne peut délivrer un angle d'arrivée, le procédé peut fonctionner suivant un mode "DTPL" seul. De même, par exemple si le système selon l'invention détecte un radar n'ayant pas une PRA constante, le système a la possibilité de ne mettre en oeuvre le procédé selon l'invention mais par exemple un mode "AOA" seul. Dans les deux cas l'association est largement facilitée car de nombreuses associations sur DTPL et AOA conjoint ont déjà été réalisées sur les autres émetteurs, ce qui réduit drastiquement le problème d'association.

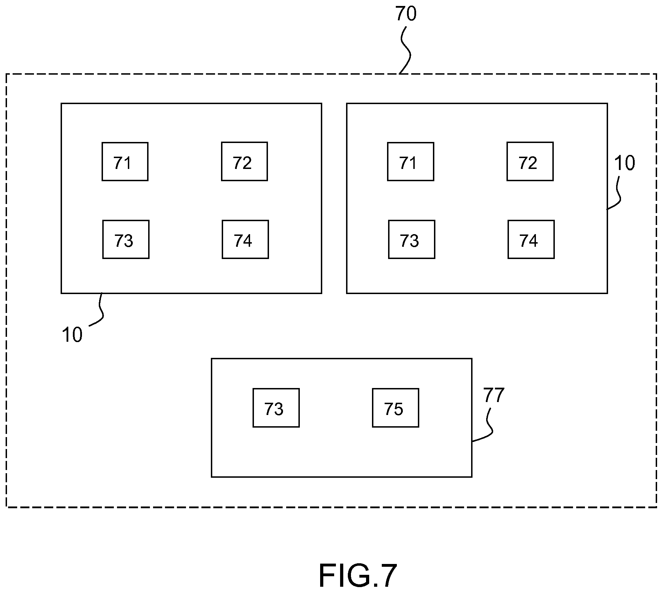

La figure 7 représente de façon schématique, un exemple de réalisation d'un système de détection et de localisation 70 suivant l'invention. Le système 70 selon l'invention comporte au moins deux stations MRE 10 et un calculateur 75. Les stations MRE 10 peuvent être fixes ou mobiles. Elles peuvent être embarquées sur véhicules terrestres, maritimes ou aéroportés comme par exemple, des drones, des avions ou des hélicoptères.

Suivant un mode de réalisation, le calculateur 75 est situé dans une des stations MRE du système. Suivant un autre mode de réalisation le calculateur 75 est situé dans une station dédiée 77.

Chaque station MRE 10 possède au moins un senseur passif MRE et un module de réception 71 apte à calculer le temps de passage de lobe d'émission d'un ou plusieurs faisceaux radar. Au moins un module de réception 71 des stations MRE 10 du système est apte à calculer l'angle d'arrivée du lobe d'émission.

Chaque station 10 du système possède un module de pistage local 72 apte à associé les plots d'un même émetteur 10 au cours du temps.

Chaque station MRE 10 du système possède un module de communication apte à communiquer avec le calculateur 75.

Chaque station MRE 10 du système possède un module de synchronisation74. Le module de synchronisation 74 a pour principale fonction de permettre de dater les différents événements par rapport à une base temporelle commune à toutes les stations MRE 10 et ainsi coordonner leurs opérations entre elles en fonction du temps. Les modules de synchronisation 74 peuvent par exemple se synchroniser avec les satellites de géolocalisation. Suivant un mode de réalisation, la synchronisation est obtenue grâce à un récepteur GPS. L'exigence de synchronisation temporelle étant de l'ordre d'environ 10 µs, un récepteur standard de géolocalisation peu coûteux peut être utilisé.

Dans le cas de stations MRE 10 fixes les positions et harmonisations peuvent être obtenues par une procédure peu couteuse de calibration.

La présente invention peut trouver une application dans de nombreux domaines aussi bien sur terre, en mer, ou dans les airs. Dans un contexte marine, l'invention peut par exemple trouver une application dans la surveillance côtière à partir de stations MRE. En effet, les radars de navigation du domaine marine (DECCA) présentent la particularité d'avoir un période de rotation d'antenne constante.

Dans le cadre d'une application terrestre on peut citer par exemple la surveillance de certaines zones par un essaim de drones munis de capteurs passifs. Suivant un autre exemple, dans le domaine aérien l'invention peut être utilisée pour la trajectographie des aéroportés par un réseau de stations MRE avionnées ou réparties au sol

De façon générale, la présente invention peut trouver une application dans tout environnement où opèrent des émetteurs radar à balayage quasi constant. C'est notamment le cas de nombreux radars à balayage mécanique, ou bien des modes de veilles de certains radars à balayage électronique. Elle permet de mettre en situation tactique (SITAC) très rapidement tous les radars à balayage constant fixes ou mobiles présents dans le champ de veille des stations MRE. Ceci contribue à fortement clarifier la situation pour traiter ensuite les radars à balayage non constant.

## Revendications

1. Procédé de localisation passive d'émetteurs radar mis en oeuvre par au moins deux stations de Mesures de Renseignements Electroniques dites MRE (10), lesdits radars ayant une vitesse de balayage quasi constante au cours du passage sur l'ensemble comprenant au moins deux stations MRE (10), chacune desdites stations MRE (10) étant apte à intercepter les lobes d'émission d'émetteurs radar et à estimer leurs temps de passage de lobe, TPL, et au moins une station (10) étant apte à estimer l'angle d'arrivée desdits lobes d'émission, ledit procédé étant **caractérisé en ce que** la localisation des émetteurs (11) radar est effectuée en testant l'intersection entre une courbe d'iso-Différence de Temps de Passage de Lobe (20) passant par au moins les deux stations MRE (10) et une droite de visée (12) passant par la station MRE (10) ayant mesurée l'angle d'arrivée et d'azimut égal audit angle d'arrivée mesuré.

2. Procédé suivant la revendication précédente **caractérisé en ce qu'**il comprend, pour chaque station MRE (10) :
- une étape Etp1 de détection et de suivi de lobes des émetteurs radar (11) présent dans le champ de veille de la station MRE (10) considérée,
- une étape Etp2 d'estimation, pour chaque lobe intercepté, de son angle d'arrivée, AOA, son temps de passage de lobe, TPL, ainsi que des caractéristiques de sa forme d'onde,
- une étape Etp3 d'association locale des lobes d'émission provenant de l'émission du même émetteur radar (11),
- une étape Etp4 d'intégration des angles d'arrivée et temps de passage de lobe de chaque lobe provenant de l'émission du même émetteur radar (11) et de formation de résumé de mesures (Ri) de chaque émetteur radar (11),
- une étape Etp5 de transmission des résumés de mesures (Ri) de chaque émetteur radar 11 à un module de calcul (75) ;
- et **en ce qu'**il comprend en outre une étape Etp6 de pistage global mise en oeuvre par le module de calcul (75), ledit pistage global consistant à associer les doublets intégrés, AOAi, TPLi, provenant d'un même émetteur (11) en utilisant un arbre multi hypothèses, chaque hypothèse étant testée par un calcul de vraisemblance, et à localiser géographiquement ledit émetteur radar (11).

3. Procédé selon la revendication précédente **caractérisé en ce que** l'étape Etp6 comprend en outre un filtrage des hypothèses par contraintes consistant à éliminer des hypothèses d'association de résumés incompatibles.

4. Procédé selon la revendication 1 **caractérisé en ce qu'**il comprend, pour chaque station MRE (10) :
une étape de réception et de séparation des lobes d'émission des radars (11) présent dans le champ de veille de la station MRE (10) considérée ;
une étape de transmission des données à un module de calcul (75) ;
et **en ce qu'**il comprend en outre une étape, de corrélation en 2-Dimension des données de toutes les stations MRE (10).

5. Procédé selon la revendication 2 **caractérisée en ce que** l'étape Etp6 n'est pas réalisée avec un arbre multi hypothèses mais en mettant en oeuvre une méthode d'assignation globale de type SD.

6. Système de détection et de localisation (70) apte à mettre en oeuvre le procédé suivant une des revendications précédentes **caractérisé en ce qu'**il comprend au moins deux stations MRE (10) et un module de calcul (75), chaque station MRE (10) comportant un module de réception (71) apte à estimer le temps de passage de lobe d'au moins un émetteur (11), un module de pistage local (72), un module de communication (73) apte à communiquer avec au moins les autre stations MRE (10) et un module de synchronisation (74) apte à coordonner les opérations des différentes stations MRE du système (70), le module de réception (71) d'au moins une station MRE (10) étant apte à estimer l'angle d'arrivée du lobe d'émission d'au moins un émetteur (11).

7. Système (70) suivant la revendication précédente **caractérisé en ce qu'**il comprend en outre une station dédiée comprenant un module de communication (73) apte à communiquer avec les modules de communication (73) des stations MRE (10) et **en ce que** le module de calcul (75) est situé dans ladite station dédiée (77).

8. Système (70) suivant la revendication 6 **caractérisé en ce que** le module de calcul (75) est situé dans une des stations MRE (10) du système (70).

9. Système (70) suivant une des revendications 6 à 8 **caractérisé en ce que** le module de synchronisation comprend un récepteur de géolocalisation par satellites.

## Patentansprüche

1. Verfahren zum passiven Orten von Radarsendern, die von wenigstens zwei elektronischen Unterstützungsmaßnahmen-Stationen, MRE (10) genannt, benutzt werden, wobei die Radare eine quasi konstante Abtastgeschwindigkeit beim Durchlaufen des Satzes haben, der wenigstens zwei MRE-Stationen (10) umfasst, wobei jede der MRE-Stationen (10) die Sendekeulen von Radarsendern abfangen und deren Keulendurchlaufzeit TPL schätzen kann, und wobei wenigstens eine Station (10) den Ankunftswinkel der Sendekeulen schätzen kann, wobei das Verfahren **dadurch gekennzeichnet ist, dass** die Ortung der Radarsender (11) durch Prüfen des Schnittpunkts zwischen der Keulendurchlaufzeit-Isodifferenzkurve (20), die durch wenigstens die zwei MRE-Stationen (10) passiert, und einer Sichtlinie (12) erfolgt, die durch die MRE-Station (10) passiert, die den Ankunftswinkel und den Azimut entsprechend dem gemessenen Ankunftswinkel gemessen hat.

2. Verfahren nach dem vorherigen Anspruch, **dadurch gekennzeichnet, dass** es für jede MRE-Station (10) Folgendes beinhaltet:
- einen Schritt Etp 1 des Erkennens und Verfolgens von Keulen der Radarsender (11), die im Überwachungsfeld der betrachteten MRE-Station (10) vorhanden sind;
- einen Schritt Etp2 des Schätzens, für jede abgefangene Keule, ihres Ankunftswinkels AOA, ihrer Keulendurchlaufzeit TPL sowie der Kennwerte ihrer Wellenform;
- einen Schritt Etp3 des lokalen Assoziierens von Sendekeulen, die von der Übertragung vom selben Radarsender (11) ausgehen;
- einen Schritt Etp4 des Integrierens der Ankunftswinkel und Keulendurchlaufzeiten jeder Keule, die von der Sendung desselben Radarsenders (11) und vom Bilden einer Zusammenfassung von Maßnahmen (Ri) jedes Radarsenders (11) ausgehen;
- einen Schritt Etp5 des Übertragens der Zusammenfassungen von Maßnahmen (Ri) jedes Radarsenders (11) zu einem Rechenmodul (75);
- und dadurch, dass es ferner einen Schritt Etp6 des globalen Verfolgens beinhaltet, implementiert vom Rechenmodul (75), wobei das globale Verfolgen das Assoziieren der integrierten Dubletts AOAi, TPLi, die vom selben Sender (11) ausgehen, anhand eines Multi-Hypothesebaums, wobei jede Hypothese mit einer Wahrscheinlichkeitsberechnung geprüft wird, und das geographische Orten des Radarsenders (11) beinhaltet.

3. Verfahren nach dem vorherigen Anspruch, **dadurch gekennzeichnet, dass** Schritt Etp6 ferner ein Filtern der Hypothesen nach Beschränkungen umfasst, der das Eliminieren von Assoziationshypothesen von inkompatiblen Zusammenfassungen beinhaltet.

4. Verfahren nach Anspruch 1, **dadurch gekennzeichnet, dass** es für jede MRE-Station (10) Folgendes beinhaltet:
einen Schritt des Empfangens und Trennens der Sendekeulen der Radare (11), die im Überwachungsfeld der betrachteten MRE-Station (10) vorhanden sind;
einen Schritt des Übertragens der Daten zu einem Rechenmodul (75);
und dadurch, dass es ferner einen Schritt des zweidimensionalen Korrelierens der Daten aller MRE-Stationen (10) beinhaltet.

5. Verfahren nach Anspruch 2, **dadurch gekennzeichnet, dass** der Schritt Etp6 nicht mit einem Multi-Hypothesebaum, sondern durch Implementieren eines globalen Zuordnungsverfahrens des SD-Typs ausgeführt wird.

6. Erkennungs- und Ortungssystem (70), das das Verfahren nach einem der vorherigen Ansprüche implementieren kann, **dadurch gekennzeichnet, dass** es wenigstens zwei MRE-Stationen (10) und ein Rechenmodul (75) umfasst, wobei jede MRE-Station (10) Folgendes umfasst: ein Empfangsmodul (71), das die Keulendurchlaufzeit von wenigstens einem Sender (11) schätzen kann, ein lokales Verfolgungsmodul (72), ein Kommunikationsmodul (73), das mit wenigstens den anderen MRE-Stationen (10) kommunizieren kann, und ein Synchronisationsmodul (74), das die Operationen der verschiedenen MRE-Stationen des Systems (70) koordinieren kann, wobei das Empfangsmodul (71) von wenigstens einer MRE-Station (10) den Ankunftswinkel der Sendekeule von wenigstens einem Sender (11) schätzen kann.

7. System (70) nach dem vorherigen Anspruch, **dadurch gekennzeichnet, dass** es ferner eine dedizierte Station umfasst, die ein Kommunikationsmodul (73) umfasst, das mit den Kommunikationsmodulen (73) der MRE-Stationen (10) kommunizieren kann, und **dadurch gekennzeichnet, dass** sich das Rechenmodul (75) in der dedizierten Station (77) befindet.

8. System (70) nach Anspruch 6, **dadurch gekennzeichnet, dass** sich das Rechenmodul (75) in einer der MRE-Stationen (10) des Systems (70) befindet.

9. System (70) nach einem der Ansprüche 6 bis 8, **dadurch gekennzeichnet, dass** das Synchronisationsmodul einen Satellitengeolokalisierungsempfänger umfasst.

## Claims

1. A method for passively locating radar transmitters used by at least two Electronic Support Measures stations, which are called MRE stations (10), said radars having a practically constant scanning speed when transitioning over the set that comprises at least two MRE stations (10), each of said MRE stations (10) being able to intercept the transmission lobes of radar transmitters and to estimate their Lobe Transit Time TPL, and at least one station (10) being able to estimate the angle of arrival of said transmission lobes, said method being **characterised in that** the radar transmitters (11) are located by testing the intersection between a Lobe Transit Time iso-Difference curve (20) passing through at least the two MRE stations (10) and a line of sight (12) passing through the MRE station (10) that measured the angle of arrival and azimuth corresponding to said measured angle of arrival.

2. The method according to the preceding claim, **characterised in that** it comprises, for each MRE station (10):
- a step Etp1 of detecting and tracking lobes of the radar transmitters (11) that are present in the surveillance field of the considered MRE station (10);
- a step Etp2 of estimating, for each intercepted lobe, its angle of arrival AOA, its lobe transit time TPL, as well as the characteristics of its waveform;
- a step Etp3 of locally associating transmission lobes originating from the transmission from the same radar transmitter (11);
- a step Etp4 of integrating the angles of arrival and lobe transit times of each lobe originating from the transmission from the same radar transmitter (11) and of forming a summary of measures (Ri) of each radar transmitter (11);
- a step Etp5 of transmitting the summaries of measures (Ri) of each radar transmitter (11) to a computation module (75);
- and **in that** it further comprises a step Etp6 of global tracking implemented by said computation module (75), said global tracking comprising associating the integrated doublets AOAi, TPLi originating from the same transmitter (11) using a multi-hypotheses tree, each hypothesis being tested by a likelihood computation, and geographically locating said radar transmitter (11).

3. The method according to the preceding claim, **characterised in that** step Etp6 further comprises filtering the hypotheses by constraints, which consists of eliminating hypotheses of association of incompatible summaries.

4. The method according to claim 1, **characterised in that** it comprises, for each MRE station (10):
a step of receiving and splitting transmission lobes of the radars (11) present in the surveillance field of the considered MRE station (10);
a step of transmitting the data to a computation module (75);
and **in that** it further comprises a step of 2-dimensional correlation of the data of all of the MRE stations (10).

5. The method according to claim 2, **characterised in that** step Etp6 is not carried out with a multi-hypotheses tree but is carried out by implementing a global assignment method of the SD type.

6. A detection and location system (70) able to implement the method according to any one of the preceding claims, **characterised in that** it comprises at least two MRE stations (10) and a computation module (75), each MRE station (10) comprising a reception module (71) able to estimate the lobe transit time of at least one transmitter (11), a local tracking module (72), a communication module (73) able to communicate with at least the other MRE stations (10) and a synchronisation module (74) able to coordinate the operations of the various MRE stations of the system (70), the reception module (71) of at least one MRE station (10) being able to estimate the angle of arrival of the transmission lobe of at least one transmitter (11).

7. The system (70) according to the preceding claim, **characterised in that** it further comprises a dedicated station comprising a communication module (73) able to communicate with the communication modules (73) of the MRE stations (10) and **in that** said computation module (75) is located in said dedicated station (77).

8. The system (70) according to claim 6, **characterised in that** the computation module (75) is located in one of the MRE stations (10) of the system (70).

9. The system (70) according to any one of claims 6 to 8, **characterised in that** the synchronisation module comprises a satellite geolocation receiver.
